# EUROPEAN PATENT APPLICATION

(11) **EP 1 889 676 A1**
(43) Date of publication of application: **20.02.2008**
(21) Application number: 06425559.9
(22) Date of filing: 02.08.2006
(51) Int. Cl.: B22F 1/00, C22C 1/04, A01N 59/16

(54) **Nanostructured metallic silver pre-activated as an antibacterial agent**

(71) Applicant: Università Degli Studi Di Milano - Bicocca, 20126 Milano (IT); Fabbriche Riunite Metalli in Foglie e in Polvere S.p.A., 20081 Morimondo (MI) (IT)
(72) Inventor: Pitea, Demetrio, c/o Universita' Degli Studi, 20126 Milano (IT); Lasagni, Marina, c/o Universita' Degli Studi, 20126 Milano (IT); Collina, Elena, c/o Universita' Degli Studi, 20126 Milano (IT); Campiglio, Alfredo, c/o Fabbriche Riunite Metalli, Caselle, 1 20081 Morimondo (MI) (IT)
(74) Representative: Banfi, Paolo

(57) **Abstract**

Nanostructured metallic silver pre-activated as an antibacterial agent, by means of an heat treatment in a reducing environment or of an oxidising agent.

## Description

This invention relates to the use of nanostructured metallic silver pre-activated, as an antibacterial agent, by thermal or chemical activation processes of silver nanoparticles, and antimicrobial compositions containing said nanoparticles.

### Prior art

Silver was used for centuries to prevent and treat a variety of illnesses, especially infections (Hill, W.R.; Pillsbury, D.M. Argyria - The Pharmacology of Silver; Williams and Wilkins: Baltimore, 1939; Thompson, N.R. In: Comprehensive Inorganic Chemistry; Bailer, J.C., Emeléus, H.J., Nyholm, R., Trutman-Dickeson, A.F., Eds.; Pergamon Press: Oxford, U.K., 1973; Vol. IIID). As early as Greek and Roman times, royal courts used silver cutlery and vessels for their banquets.

At the beginning of last century, Gibbard was the first to systematically investigate the antimicrobial properties of silver (J. Am. Public Health 1937, 27, 122). These properties are known for silver in the form of ions and colloidal particles, and for silver in the metallic state.

Solutions of silver ions have been used for nearly a century as antimicrobial agents in the treatment of lesions.

Colloidal silver solutions, obtained by passing a small electrical charge through water and silver crystals (Spadaro, J.A. in: Modem Bioelectricity; Marino, A.A., ed.; Marcel Dekker: New York, 1988), were used locally on lesions. In the 1920s, the US Food and Drug Administration approved these silver solutions as antibacterial agents.

Formulations containing silver as a salt (e.g. silver sulphadiazine; Fox, C. Int. Surg. 1975, 60, 275) or in the form of other compounds (e.g. bonded to a protein) were developed from the 1940s, and were highly prized as antimicrobial agents for the local treatment of skin lesions.

Recently, progress in the field of nanotechnology has supplied a new form of metallic silver: nanocrystalline silver. By reducing the volume of the crystals with nanotechnology, the exposed surface area of the crystal is significantly increased, thus increasing the area available for chemical and biological reactions. On the basis of some studies performed with nanocrystalline silver, it has been postulated that in addition to Ag⁺ ions, the surface also releases other species of silver (Fu-Ren F., Bard A. J. Phys. Chem. 2002, 106, 279-287), and that part of the antimicrobial efficacy of silver is due to these species, contrary to some theories (Acél, D.Z. Biochemistry 1920, 112, 23), which attribute the antibacterial activity solely to the Ag⁺ ions.

### Description of the invention

The invention relates to the use of nanostructured metallic silver pre-activated as an antibacterial agent, in particular for the treatment of drinking water and water used for sanitary purposes and services, with the aim of reducing the microbe count.

The invention also relates to production processes for antibacterial materials, including thermal or chemical activation of nanostructured metallic silver.

It has surprisingly been found that the antibacterial activity of silver nanoparticles is induced and/or considerably increased by heat treatments in a reducing environment, or chemical treatments in the presence of oxidising agents.

Heat activation is conducted in a reducing atmosphere, e.g. generated by dissociation of ammonia at temperatures exceeding 700-800°C.

Alternatively, activation can be performed chemically with oxidisers such as bichromate, hypochlorite, permanganate and hydrogen peroxide, preferably by placing the silver nanoparticles in contact with hydrogen peroxide in aqueous solution for times ranging between 30 minutes and 4 hours.

Silver nanoparticles can be obtained by known, conventional methods.

The activated nanoparticles according to the invention can be used in a variety of applications in which it is desirable to counteract the proliferation of micro-organisms such as bacteria, fungi and viruses. The activated nanoparticles according to the invention could be used, for example, for water treatment (civil or industrial waste water, swimming pools, purification of drinking water, etc.), medical devices (gauze and bandages, sanitary garments, prostheses, catheters, diagnostic and surgical instruments for hospital and clinic use, and contact lenses), as preservatives for cosmetic, pharmaceutical and food formulations, and as active ingredients of topical formulations for the treatment of infections and wounds.

For the recommended uses, activated silver nanoparticles will be adsorbed or impregnated on materials or added to the formulations according to conventional techniques, in pre-determined quantities opportunely chosen by experts in the specific field of application on the basis of the antimicrobial activity data set out below, and the properties of the material to be treated.

The invention is illustrated in greater detail in the examples below.

### EXAMPLE 1 - Heat activation

50 g of nanostructured silver is placed in an oven at 710°C and for 60 s in a reducing atmosphere, generated by dissociation of ammonia at 890°C. During cooling, the reducing atmosphere is maintained for a further 180 s.

### EXAMPLE 2 - Chemical activation

2 g of nanostructured silver is reacted with 40 mL of 30% H₂O₂ for 2 h. After filtration and washing with MilliQ water, the solid obtained is dried in air under a hood.

The product obtained has a long-lasting bactericidal capacity. The potential of the product was evaluated on a laboratory batch scale.

### EXAMPLE 3 - Antibacterial activity

Different tests have been conducted to study the variation over time of the bacteria count in the presence of the product based on metallic silver. The bacterial strain used was *E. Coli*, because these micro-organisms, by law, must not be present in the water of swimming pools (nil bacteria count).

A bacterial inoculum with a known initial OD (optical density) corresponding to a given quantity of micro-organisms was performed for each test.

The preparation of the inoculum falls into two stages:
1. Preparation of preinoculum.
2. Preparation of inoculum.

### Preparation of preinoculum

One aliquot of *E. coli* is taken from the plate with a sterile loop and resuspended in an Erlenmeyer flask with a known volume (20 mL) of enriched medium (LD). The suspension is left to incubate for approx. 24 hours at 37°C.

### Preparation of inoculum

3 mL of preinoculum is taken up and placed in an Erlenmeyer flask containing 100 mL of enriched medium (LD). The suspension is left to incubate for 12-24 hours. 50 mL of inoculum, with a starting OD of 2, is pelleted to obtain the cells "as is". The cells thus obtained are resuspended in 50 mL of MilliQ water, possibly with the addition of silver.

The sample is incubated at a constant temperature of 37°C.

To monitor the variation in the number of micro-organisms over time, samples are taken at pre-set time intervals.

### Quantitation of total heterotrophic bacteria

Quantitation of the total heterotrophic bacteria comprises the following stages:
● 100 µL of sample is resuspended in 900 µl of sterilised water.
● 100 µL of suspension is taken up to perform a serial dilution in test tubes containing 900 µL of sterilised water.
● 100 µL aliquots of each dilution are plated in complete agarised LD medium; the plates are left to incubate at 30°C until no further bacterial growth is observed.

The bacteria count is expressed as *colony-forming units* (CFU) per unit of volume (mL) of the sample analysed.

### Experimental tests

The charts below schematically show the tests conducted to characterise the bactericidal capacity of the product. They were performed with nanostructured silver "as is" (Chart 1), chemically activated silver (Chart 2), and heat-activated silver (Chart 3). The results are reported as the time required for the bacteria count to be eliminated, or as the bacteria count determined at the first and last test times. In all cases, a control experiment was conducted in parallel in the absence of silver.

Only suitably activated nanostructured silver showed a bactericidal capacity, which was also maintained in a second test (see Charts 2 and 3). As will be seen, the time required to eliminate the microbe count declines in as the amount of silver used increases (see Chart 3). In all the tests, the order of magnitude of the microbe count determined for the test remained unchanged over time.

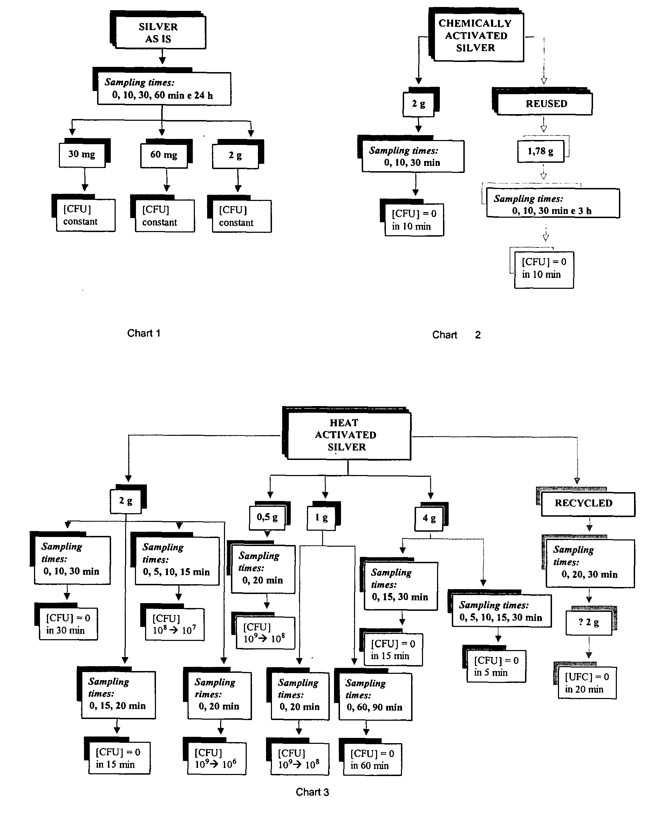

## Claims

1. Nanostructured metallic silver pre-activated as an antibacterial agent.

2. Nanostructured metallic silver as claimed in claim 1, activated by heat treatment in a reducing environment.

3. Nanostructured metallic silver as claimed in claim 2, wherein the treatment is performed in the presence of ammonia at temperatures of between 700 and 800°C.

4. Nanostructured metallic silver as claimed in claim 1, activated with oxidising agents.

5. Nanostructured metallic silver as claimed in claim 4, wherein the oxidising agents are chosen from among bichromates, hypochlorites, permanganates and hydrogen peroxide.

6. Nanostructured metallic silver as claimed in claim 5, wherein the oxidising agent is hydrogen peroxide.

7. Use of metallic silver nanoparticles as claimed in claims 1-6 to treat water used as drinking water and for sanitary purposes, and medical devices, and their use as preservatives for cosmetic, pharmaceutical and food formulations and as active ingredients of topical formulations for the treatment of infections and wounds.

8. Process for the preparation of silver nanoparticles with antibacterial activity which includes heat activation or oxidative activation of silver nanoparticles.
